# EUROPEAN PATENT SPECIFICATION

(11) **EP 4 638 870 B1**
(45) Date of publication and mention of the grant of the patent: **25.11.2026**
(21) Application number: 23833427.0
(22) Date of filing: 18.12.2023
(51) Int. Cl.: D21J 3/10, B65D 65/46, B65D 85/804

(54) **A REINFORCED MOULDED FIBRE CAPSULE FOR FOOD AND BEVERAGE PREPARATION**
VERSTÄRKTE GEFORMTE FASERKAPSEL ZUR LEBENSMITTEL- UND GETRÄNKEHERSTELLUNG
CAPSULE RENFORCÉE EN FIBRES MOULÉES POUR LA PRÉPARATION D'ALIMENTS ET DE BOISSONS

(30) Priority: 21.12.2022 EP 22215327
(43) Date of publication of application: 29.10.2025
(73) Proprietor: Société des Produits Nestlé S.A., 1800 Vevey (CH)
(72) Inventor: ABEGGLEN, Daniel, 1091 GRANDVAUX (CH); GALAFFU, Nicola, 01210 ORNEX (FR); MURITH, Mathieu, 1663 PRINGY (CH)
(74) Representative: Houppe, Marie
(86) International application number: PCT/EP2023/086240
(87) International publication number: WO 2024/132996

(56) References cited:
- WO-A1-2018/049460
- WO-A2-2015/177591
- US-A1- 2017 050 799

## Description

### Field of the invention

The present invention concerns a capsule for beverage preparation that is recyclable in the paper recycling stream and comprises an outer body made of compressed fiber pulp, whose walls are reinforced to be able to withstand high internal pressure.

### Background of the invention

Packaging items, especially for food and beverage need to fulfil various purposes. Beyond storage of their contents, they need to be mechanically resistant, due to the fact that during manufacturing, forming, and/or filling, they can be subject to processes under which their constitutive material undergoes high mechanical stress. Then again, during transportation, storage and/or during use, high mechanical stress conditions can also apply, which can damage the integrity of said packaging items.

Capsules and pods for beverage preparation in a beverage preparation machine, are one example - amongst others - of such packaging items which undergo high mechanical stress, especially during usage. They are a convenient and clean approach to beverage consumption. In the following description, the generic term "capsule" will be used and encompasses single use packages for preparing beverages for human consumption by insertion in a beverage preparation machine that is adapted to inject a fluid - in principle hot water - into the package for mixing with an ingredient contained therein. Examples of such beverage packages are not limited to rigid capsules, but also comprise rigid, semi-rigid, or flexible pods, pads, cartridges of various types, and even sachet-type containers.

Typically, such capsules are manufactured from plastics such as polyolefins or biodegradable plastics, that are generally injected or thermoformed to obtain a cup that is filled with an ingredient and then closed with a membrane to close the capsule in a gas and moisture tight manner.

As mentioned above, in the recent period, awareness about the environment impact of packaging plastics increased, and there is a need for new packaging solutions that are either biodegradable after use, or recyclable, and in particular such that a used package can be either composted or recycled in a recycling stream that is adapted for paper or carton ("paper recycling stream").

Therefore, beverage preparation have recently been developed which are made of cellulosic fiber pulp (or "pulp" or "fiber") which is moulded to form a rigid or semi-rigid capsule cup-shaped body defining a compartment for containing a beverage precursor ingredient such as roast and ground coffee. The cup-shaped body is closed by attaching (e.g. by sealing) a wall, for instance a membrane or a film to it.

In order to guarantee freshness of the beverage precursor ingredient over the lifetime of the capsule, and especially during storage until use, it is necessary to incorporate an oxygen and moisture barrier material to the fiber pulp (as well as to the closing membrane). The barrier material generally takes the form of a so-called "barrier liner" which is a multilayer film adhered to the internal surface of the pulp body (i.e. the surface turned towards the ingredient). Adhering the liner onto the pulp is done by thermoforming the two in a mould. Not all of the layers in the barrier liner bring barrier properties themselves: some of them are used as adhesion promoters between other barrier and structural layers of the liner. Such adhesion promoting layers are so-called "tie layers".

During beverage preparation, the capsule is inserted into a brewing chamber of a beverage preparation machine. The machine comprises water injection means, such as a set of blades designed to pierce through the thickness of the capsule body and inject water therein under pressure. Water mixes with the ingredient which produces a beverage. High internal water pressure is necessary to achieve proper extraction of flavours, proteins and other components from the precursor ingredient contained therein, and allow a good quality product to be dispensed to the consumer. In the case of a coffee, it is essential that water pressure inside the capsule reaches several bar of pressure for a proper extraction of the coffee aromatic compounds, and proteins to create a quality crema on top of the coffee. Pressures inside a quality capsule for preparing good coffee can reach up to 8 bar (pressure relative to the ambient atmospheric pressure outside the capsule), or even up to 15 bar.

Beverage preparation with pulp-based capsules as described above is a very promising way to reduce the environmental footprint of packages. However, a technical drawback appeared during usage of the capsule within the beverage preparation machine.

By design, the brewing chamber (or "capsule holder") of a beverage preparation machine is slightly larger than the capsule outside boundaries, in order to allow easy capsule removal from said chamber after use.

Moreover, during the use (or "extraction") phase, beverage capsules are exposed to high stress due to high temperature of the water injected therein (extraction water is generally heated at a temperature of 80°C to 95°C), or an internal pressure of the water injected therein of up to 14 bar or sometimes even 15 bar, or a mechanical constraint on the capsule walls due to the principle of extraction (this is the case for instance in the so-called "Vertuoline" Nespresso system, wherein capsules are rotated at a very high speed during extraction, which generates centrifugal forces onto the capsule walls in a range from 400 to 700N/cm², generally of about 500N/cm²). Depending on the type of beverage preparation machine and capsules, a combination of two or more of the afore-mentioned constraints on the material can also occur.

In prior art capsules made of thermoplastic polymer such as e.g. polypropylene (PP), the material is sufficiently elastic and flexible so that it can expand to conform to the brewing chamber profile when internal pressure increases within the capsule compartment. Alternatively, in some instances where the capsule body is made out of metal such as aluminium, the metal is sufficiently strong to withstand mechanical forces (shearing forces, or internal pressure, possibly combined with high temperature of water).

However, it was found that unlike polypropylene or aluminium, a molded pulp wall structure is very soft a material, and for instance has very low elongation properties that cannot compensate at all the gap between the capsule body and the capsule holder. As a result, molded pulp capsules burst at the time internal pressure within the capsule increases, or generally when high mechanical forces are applied to the capsule, because the capsule walls are not properly held and supported by the capsule holder or brewing chamber during extraction. Therefore, a moulded pulp capsule body expands within the brewing chamber (or capsule holder) and the pulp material rapidly reaches a stretched state beyond its mechanical resistance limit.

Bursting of capsules is of course highly undesirable, because of the poor quality of the beverage that is therefore obtained, also because of the messiness and even safety challenges that such bursting can trigger. Examples of an packaging item and a method for its manufacturing are known respectively from US2017050799 and WO2018049460.

It is therefore one main objective of the present invention to provide a technical solution to the challenge mentioned above in packaging items, for instance in beverage capsules, made of moulded pulp that are mechanically highly resistant, and wherein said packaging items are preferably recyclable, and/or industrial or home compostable.

### Summary of the invention

The objective set out above is met with the present invention, with a packaging item comprising a tridimensional body made of rigid or semi-rigid moulded fiber pulp, said body forming a compartment for enclosing a product and adapted to be closed by closing means, characterized in that said body further comprises a reinforcing rigid mesh embedded at least partially into the mass of fiber pulp, said mesh comprising fibres selected within the list of: natural plant fibres, animal fibres, biopolymer synthetic fibres, or a combination thereof, said fibres being impregnated with a dried water-soluble biopolymer, a dried water-soluble compostable polymer, a dried starch-based solution, or a combination thereof, or said fibres being impregnated with a cured polypeptide.

Furthermore, if any are used in the context of the present invention, preferred biopolymers that are suitable for the invention are home compostable polymers. Home compostability is defined on a regional or national level and generally based on international standard EN 13432. Materials or products compliant with these standards can be recognized by a conformity mark stating their home compostability. Some examples of home compostability certifications at a national level include, but are not limited to, the following. The certifier TÜV AUSTRIA BELGIUM offers such a home compostability certification scheme, and DIN CERTCO offers a certification for home compostability according to the Australian standard AS 5810. Italy has a national standard for composting at ambient temperature, UNI 11183:2006. In November 2015, the French Standard "NF T 51-800 Plastics - Specifications for plastics suitable for home composting" was introduced. This standard is covered in the DIN CERTCO scheme.

In a preferred embodiment of the invention, the packaging item further comprises a multilayer film liner attached to the inner surface of the fiber pulp body.

Advantageously, said liner can comprise from outside to inside:
(i) an outermost polymeric layer comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof, said outermost layer having a thickness comprised between 10 and 100 µm, and said first layer having an elongation at break comprised between 10% and 800%, a melt flow rate (MFR) comprised between 2 and 4 when measured at 150°C during 10 minutes with a pressure of 2.16 kg, and said first layer having a melting point temperature comprised below 80°C,
(ii) a first tie layer comprising a biodegradable modified or functionalized polyolefin, having a melting point temperature comprised between 180°C and 230°C and a thickness comprised between 1 and 12 µm,
(iii) a barrier layer comprising a polymer selected within the list of: butenediol vinyl alcohol copolymer (BVOH), polyvinyl alcohol (PVOH) or a combination thereof, and having a melting point temperature comprised between 180°C and 230°C and a thickness comprised between 1 and 15 µm,
(iv) a second tie layer comprising a biodegradable modified or functionalized polyolefin, having a melting point temperature comprised between 180°C and 230°C and a thickness comprised between 1 and 10 µm,
(v) an innermost polymeric layer comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof, said first layer having a thickness comprised between 10 and 100 µm, and said innermost layer having an elongation at break comprised between 10% and 1000%, a melt flow rate (MFR) comprised between 4 and 10 when measured at 190°C during 10 minutes with a pressure of 2.16 kg, and said first layer having a melting point temperature comprised between 110°C and 180°C.

In an alternative embodiment said liner comprises from outside to inside:
(i) an outermost organic adhesive layer for attaching the liner to the moulded fiber pulp, said adhesive layer comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof, said outermost layer having a thickness comprised between 10 and 100 µm, and said first layer having an elongation at break comprised between 10% and 800%, a melt flow rate (MFR) comprised between 2 and 4 when measured at 150°C during 10 minutes with a pressure of 2.16 kg, and said first layer having a melting point temperature comprised below 80°C,
(ii) an organic middle barrier layer comprising a butenediol vinyl alcohol copolymer (BVOH) grafted with maleic anhydride, and having a melting point temperature comprised between 180°C and 230°C and a thickness comprised between 1 and 20 µm,
(iii) an innermost organic structural layer comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof, said first layer having a thickness comprised between 10 and 100 µm, and said innermost layer having an elongation at break comprised between 10% and 1000%, a melt flow rate (MFR) comprised between 4 and 10 when measured at 190°C during 10 minutes with a pressure of 2.16 kg, and said first layer having a melting point temperature comprised between 110°C and 180°C.

In one embodiment of the present invention, the packaging item can be a primary packaging selected within the list of: tray, sachet, gusset wrap, tube, bag, box, brick, container, closure or a combination thereof; alternatively, the packaging item of the invention can be a secondary packaging for enclosing a primary packaging.

In another embodiment of the invention, the packaging item is a capsule for beverage preparation, comprising a cup-shaped body, and at least one closing membrane attached to said body, said body and said at least one membrane defining a closed ingredient compartment, said capsule being adapted to be pierced by water injection means of a beverage preparation machine for injecting water under pressure in the compartment, for preparing a beverage therein.

In such a capsule embodiment, the cup-shaped body preferably comprises a peripheral rim onto which the closing membrane is attached.

Furthermore, the closing membrane can be advantageously made of an extrusion coated paper, a fiber-spinning coated paper, or a polymer film comprising a compatible polymer material.

Generally, the packaging item according to present invention, can be manufactured by injection-moulding, compression moulding, extrusion-moulding, or thermoforming.

Importantly, the mesh used in a packaging item according to the present invention is preferably made of plant or animal fibres including seed hairs, such as cotton, or stem (or bast) fibres such as flax and hemp, leaf fibres such as sisal, husk fibres such as coconut, or hardwood fibres sourced from the following trees: ash (Genus Fraxinus), beech (Genus Fagus), basswood (Genus Tilia), birch (Genus Betula), black cherry (Genus Prunus), black walnut / butternut (Genus Juglans), cottonwood (Genus Populus), elm (Genus Ulmus), hackberry (Genus Celtis), hickory (Genus Carya), holly (Genus Ilex), locust (Genus Robinia; Genus Gleditsia), magnolia (Genus Magnolia), maple (Genus Acer), oak (Genus Quercus), poplar (Genus Populus), red alder (Genus Alnus), royal paulownia (Genus Paulownia), sassafras (Genus Sassafras), sweetgum (Genus Liquidambar), sycamore (Genus Platanus), tupelo (Genus Nyssa), willow (Genus Salix), yellow-poplar (Genus Liriodendron), eucalyptus, mushroom-based, silk, wool, or a combination thereof.

The product packed into said packaging item is advantageously an edible product for human or animal consumption, in particular roast and ground coffee, a water-soluble ingredient for preparing a beverage, a soup powder, an infant nutrition product, cocoa-based or dairy-based compositions, a fruit-juice precursor, or a combination thereof.

The length of the fibres that are suitable for manufacturing the body mass of a packaging item according to the invention, is preferably comprised within the range of 0.1 to 50 mm.

The diameter of the fibres that are suitable for manufacturing the reinforcing mesh for a packaging item according to the invention, is preferably comprised within the range of 5 to 30 µm, and their length is comprised preferably within the range of 0.5 to 50 cm. The tensile strength of said fiber pulp fibres is preferably comprised within the range of 1200 to 2000 MPa, preferably 1500 to 1800 MPa.

Also importantly, preferred water-soluble biopolymers is a water-soluble compostable polymer selected within the list of starch or hydroxyl propyl cellulose (HPLC) or a combination thereof.

Alternatively, a polypeptide suitable to be used in a packaging item according to the invention can be at least one of a fibrous polypeptide or a globular polypeptide selected within the list of: collagen, ovalbumin, serum albumin, lactoglobulin, or hydrolyzed forms thereof.

The present invention further relates to a method for manufacturing a packaging item as described above, said method comprising the steps of, in order:
(i) pre-cutting a flat woven fiber matrix to a predetermined shape,
(ii) drenching said flat mesh into a water-soluble biopolymer, a water-soluble compostable polymer, a starch-based solution, or a combination thereof, or into a polypeptide solution,
(iii) forming said flat mesh into a tridimensional mesh preform and drying said water-soluble biopolymer, water-soluble compostable polymer, and/or starch-based solution, or curing said polypeptide solution into a Maillard reaction, in order to obtain a hard mesh
(iv) placing said mesh preform onto the male forming part of a pulp forming mould to cover at least partially said male forming part with said mesh, said male forming part being equipped with sucking channels,
(v) placing said male forming part into a slurry tank filled with fiber slurry, and sucking pulp fibres from the slurry onto the surface of said male forming part, such that said mesh is at least partially embedded into a wet mass of fiber,
(vi) closing the mould by moving said male forming part into a female forming cavity, compressing the wet pulp into a tridimensional item, and heating the mould to dry said wet pulp item,
(vii) opening the mould and ejecting said packaging item therefrom.

By "liner" it is meant a monolayer or multilayer film that is obtained by extrusion-blowing, or extrusion-lamination, or cast-extrusion.

By "fibre", it is meant a material that is based on cellulosic and/or animal fibres; within the frame of the present specification, "pulp" or "fibre pulp" are meant as equivalent terms to "fibre" and correspond to the definition previously given. If made of cellulosic material, the fibre pulp has a minimum proportion of cellulose fibres of 80%, preferably at least 95%; the rest comprising non cellulosic binders or additives (e.g. AKD). In order to allow recyclability in a paper stream recycling process, the maximum amount of animal fibres cannot exceed 20% in volume of the total volume of fibres, i.e. the minimal amount of a cellulosic fibres is 80% in volume.

### Brief description of the drawings

Additional features and advantages of the present invention are described in, and will be apparent from, the description of the presently preferred embodiments which are set out below with reference to the drawings in which:
**Figure 1** is a schematic perspective view of a partially cut beverage preparation capsule according to the first embodiment of the invention;
**Figure 2** is a schematic cut view of a capsule per figure 1, which depicts the incorporation of a reinforcing mesh according to the invention, into the structure of the capsule body;
**Figure 3** is a figure similar to figure 2, illustrating a capsule according to a second embodiment of the invention;
**Figures 4A, 4B, 4C, 4D****,** **4E, 4F, 4G and 4H** are schematic views of the different steps of manufacturing a reinforced moulded pulp cup-shaped body with an impregnated mesh according to the invention.

### Detailed description of the invention

Quality packaging items, and in particular packaging items like beverage capsules used in a quality beverage preparation system, need to meet high quality standards.

In particular, capsules that burst and/or capsules that leak during extraction (i.e. during a beverage preparation process) are not acceptable. The proposed invention aims at ensuring that packaging items in general, and for instance beverage preparation capsules do not meet the previously mentioned issues (e.g. bursting, leaking). For this reason, the present invention proposes to reinforce the body of the packaging item, to cope with mechanical resistance requirements.

In the example of capsules (or pods, or pads) for beverage preparation in a beverage preparation machine, the capsules have to withstand the pressure exerted on their walls during extraction. The reinforcement comes from added natural fiber mesh imbedded at least partially into the capsule wall. This mesh is designed to absorb the induced expanding forces applied to the capsule during its use.

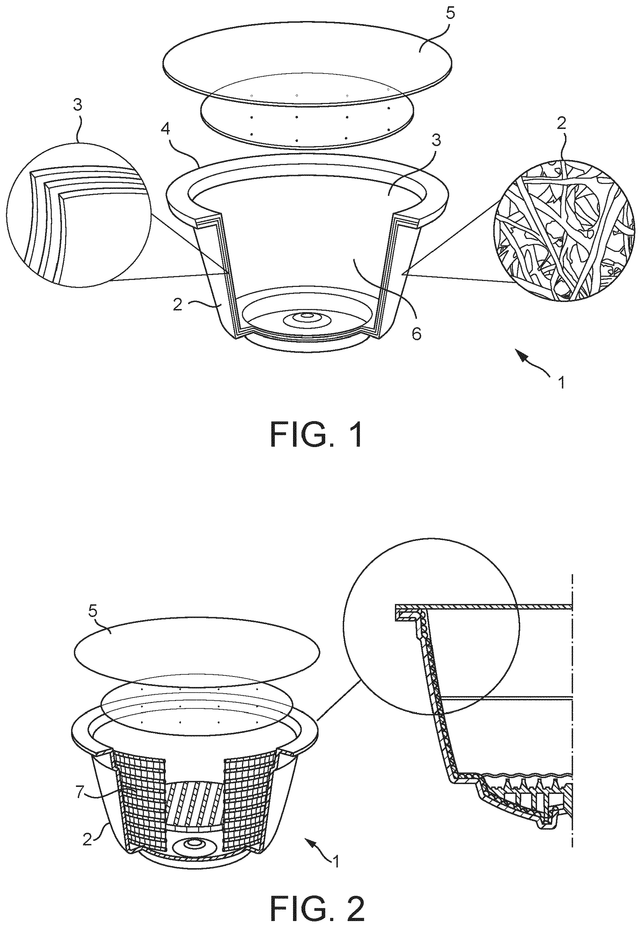

As illustrated in **figure 1****,** a first embodiment of the present invention relates to a packaging item which is a beverage preparation capsule 1. The beverage capsule 1 comprises a cup-shaped capsule body 2 covered on its inner surface by an oxygen and barrier liner 3. As depicted in an enlarged partial view, on the left-hand side of **figure 1****,** the liner 3 comprises three constitutive layers. The capsule body 2 further comprises a peripheral rim 4 that surrounds an opening, said opening being closed by a closing membrane 5 that is sealed onto the rim 4. The capsule body closed by the membrane 5 defines a compartment 6 for containing a precursor ingredient for preparing a beverage, for instance a roast and ground coffee ingredient (not shown).

As shown in an enlarged partial view, on the right-hand side of **figure 1****,** the cup-shaped capsule body 2 is manufactured out of a moulded fiber pulp. In the enlarged partial view of **figure 1** is shown the imbrication of cellulose fibres.

According to the principle of the invention and as illustrated in **figure 2****,** the capsule body comprises a reinforcing mesh 7. The mesh 7 is liaised with, and at least partially embedded into the rest of the capsule body material, especially to the internal surface of the fiber pulp wall, as illustrated on the enlarged partial view, in the right-hand side of **figure 1****.** At least partially embedding the mesh into the mass of fiber pulp allows to hold the pulp material during the application of forces onto it.

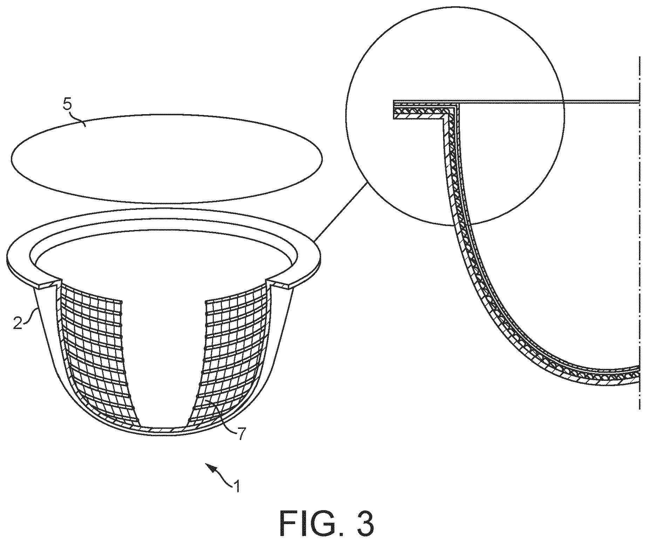

A similar, but alternative embodiment of the invention is depicted in **figure 3****,** which is a capsule for beverage preparation having a different structural design.

The reinforcing mesh 7 according to the invention that is used for reinforcing mechanically a packaging item is as follows.

The reinforcing mesh 7 is embedded at least partially into the mass of fiber pulp and comprises preferably natural plant fibres that are intricated to form a mesh matrix. The mesh can comprise synthetic polymer fibres as well, as long as they are selected from biopolymers. Formation of mesh matrixes from individual fibres is a well-known process as such and is not further discussed in the present description. The mesh is impregnated with a water-soluble biopolymer, a water-soluble compostable polymer, a starch-based solution, or a combination thereof, and formed into a shaped item which has the shape of the packaging item portion that will eventually be reinforced (it can be the shape of the packaging item as a whole if the latter is reinforced in its entirety). The shape is either very simple (i.e. a flat fabric-like item), or it can be formed into more complex tridimensional items.

Impregnation of the mesh allows to deliver thermosetting properties to the mesh which keeps its shape once it is formed e.g. by thermoforming process.

Preferably, the fibres used are flax or hemp. But they can also be sourced from another plant or animal fiber variety such as the ones listed in the list provided above.

Beverage preparation capsules 1 according to the above-mentioned embodiments are preferably manufactured with the following steps, in order.

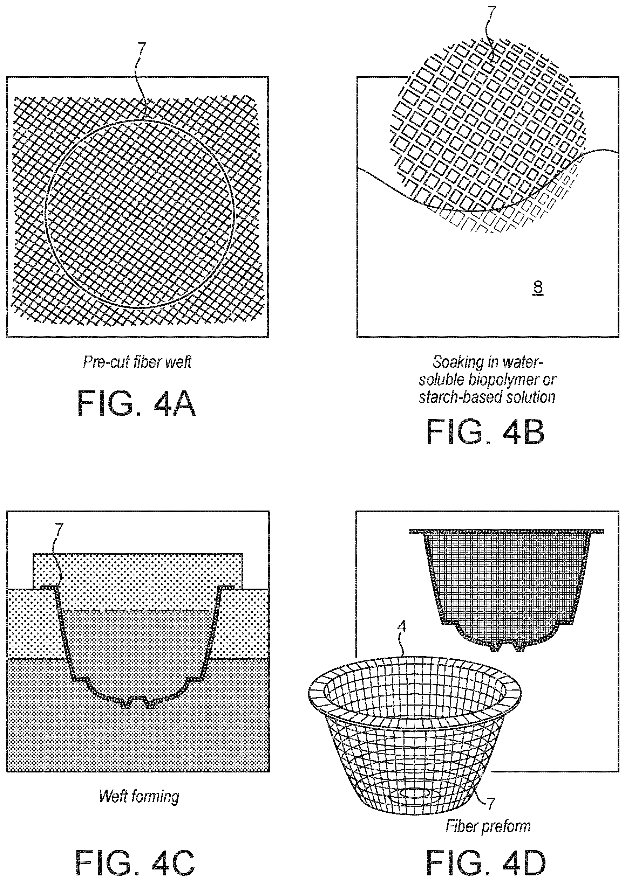

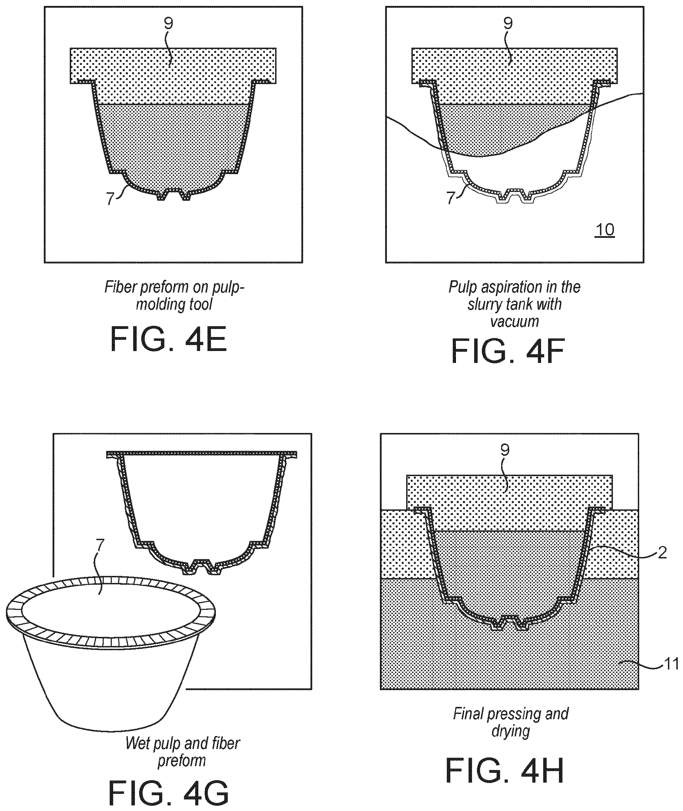

As illustrated in **figure 4A****,** in the example embodiment described therein, a flat woven fiber matrix 7 is first precut to a predetermined shape, then said flat mesh 7 is drenched into a polypeptide solution 8 (**figure 4B**).

The flat mesh is then placed into a mould and formed into a tridimensional mesh preform 7 having a cup-shape and a peripheral rim 4. The polypeptide solution impregnated as a wet solution into the mesh 7 is dried and cured through a Maillard reaction by heating the mould as illustrated in **figure 4C****,** in order to obtain a rigid tridimensional cup-shaped mesh 7 impregnated with said dried and cured polypeptide ("fiber preform" in **figure 4D**). Rigidity of the reinforcing mesh 7 is given by the curing treatment of the polypeptide which hardens the whole polypeptide matrix that impregnates the mesh, making said mesh a non-flexible matrix itself, that keeps the shape that was given by the forming step into the mould.

Alternatively, if a water-soluble biopolymer, water-soluble compostable polymer, and/or starch-based solution, is used instead of a polypeptide, said solution is dried only; there is no need for a Maillard reaction in these cases, like for a polypeptide, however in these cases, drying is sufficient to harden and settle the mesh impregnated with such polymers.

Then, as depicted in **figure 4E****,** the impregnated hard and formed mesh preform 7 is placed onto the male forming part 9 of a pulp forming mould to cover at least partially said male forming part with said mesh, said male forming part being equipped with sucking channels (not illustrated). The mesh 7 is held in place onto the forming part 9 by sucking air through the sucking channels, thereby creating a vacuum between the outer surface of the male forming part 9 and the mesh 7.

Then, said male forming part 9 covered with the mesh 7 is placed into a slurry tank filled with fiber slurry 10, as illustrated in **figure 4F****,** and pulp fibres are sucked from the slurry onto the surface of said male forming part 9 by the vacuum created at the surface of the mesh 7 and male forming part 8 (the mesh is sufficiently permeable to allow the sucking effect created by the sucking channels of the male forming part 9, at the mesh's surface). As a result, fibers aggregate from the slurry onto the surface of the mesh 7 and into the mesh matrix, until the latter is at least partially embedded into a wet mass of fiber pulp.

The mould is then closed, as shown in **figure 4H****,** by moving said male forming part 9 into a female forming cavity 11, thereby compressing the mesh that is at least partially embedded into wet fiber; the closed mould is heated in order to dry the wet pulp material until a dry cup-shaped capsule body 2 is obtained (**figure 4H**).

Finally, upon re-opening of the mould, the fiber capsule body 2 is ejected therefrom (not shown in the drawing).

The same manufacturing steps can be used to other types of packaging items than beverage preparation capsules. The shape will change, but the principle of manufacturing remains.

Moulding fiber pulp is known in the art already and will not be described in more detail in the present description.

The mesh is designed to reinforce the capsule body and absorb the expansion load generated by the extraction process, i.e. internal fluid pressure due to water injected in the closed capsule or centrifugal forces applied to the capsule body when the capsule is rotated inside the beverage preparation machine for preparing a coffee.

For this application, the diameter and the tensile strength - and also the flexural modulus, when possible - of the fibers that are used for producing the mesh, are the key selection criteria. In one example, woven flax fiber is selected as a preferred fiber, with the following preferred physical characteristics:

| | |
|---|---|
| Fiber diameter [µm] | 12 to 16 |
| Tensile strength [Mpa] | 1500 to 1800 |
| Fiber length (mm) | 0.7 to 25 |

Flax fiber, like cotton, is a cellulose polymer, but its structure is more crystalline, making it stronger, crisper and stiffer. One of nature's strongest vegetable fibres, flax was also one of the first to be extracted, spun and woven into textiles.

In the present exemplary embodiment of the invention, after the above-mentioned manufacturing steps, and once the hard and dry cup-shaped capsule body is obtained, a barrier liner film 3 is added to the fiber pulp cup-shaped capsule body in order to provide barrier properties to moisture and/or oxygen to the capsule.

The barrier liner film 3 is provided as a flat sheet of polymeric material and placed over the opening of the pulp cup-shaped body 2, after it is formed according to the above-described manufacturing steps, and thermoformed therein by a conventional thermoforming process.

Once the attachment process of the barrier liner 3 onto the inside surface of the pulp cup-shaped body 2 is terminated, the peripheral rim 4 can be trimmed, if necessary, in order to obtain the right rim diameter (the trimming operation is performed only in case the rim moulded in the above manufacturing steps is not sufficiently regular and with correct dimensions.

After these steps, an empty reinforced pulp capsule 1 with barrier properties is obtained, as illustrated in **figure 1****,** which comprises an opening through which a coffee powder is filled. Then, the filled capsule is closed by sealing the membrane 5 onto the rim 4 of said capsule, per a conventional sealing process. A fully formed, filled and closed capsule made of reinforced fiber pulp is then obtained.

Typical temperatures for thermoforming the liner into the moulded pulp capsule body are within a range comprised between 390°C and 230 °C, or between 410 °C and 220°C, for upper and respectively lower heating sources. The plug has to be properly adapted to the capsule profile to ensure homogeneous liner distribution and deformation.

The final thermoformed capsule has a homogeneously distributed liner that shows good adhesion to the molded pulp surface. Typical barrier values for the capsule and liner structure, varies between 0.001 and 0.01 cc/pack/day/atm, preferably below 0.009 cc/pack/day/atm, more preferably below 0.0033 cc/pack/day/atm.

The characteristics of the invention described above in reference to a beverage capsule, also apply to another type of embodiment of the invention, whereby the packaging item is not a beverage capsule, but rather a secondary packaging, such as for instance a moulded pulp carton for containing beverages, or a wrapping sachet for containing such products as powder food products. Of course, in each individual case, known manufacturing techniques to assemble the barrier liner to the moulded pulp component of the capsule can be adapted.

It should be understood that various changes and modifications to the presently preferred embodiments described herein will be apparent to those skilled in the art. Such changes and modifications can be made without departing from the spirit and scope of the present invention and without diminishing its attendant advantages. **It** is therefore intended that such changes and modifications be covered by the appended claims.

## Claims

1. A packaging item (1) comprising a tridimensional body (2) made of rigid or semi-rigid moulded fiber pulp, said body forming a compartment for enclosing a product and adapted to be closed by closing means (5), **characterized in that** said body (2) further comprises a reinforcing rigid mesh (7) embedded at least partially into the mass of fiber pulp, said mesh (7) comprising fibres selected within the list of: natural plant fibres, animal fibres, biopolymer synthetic fibres, or a combination thereof, said fibres being impregnated with a dried water-soluble biopolymer, a dried water-soluble compostable polymer, a dried starch-based solution, or a combination thereof, or said fibres being impregnated with a cured polypeptide.

2. A packaging item (1) according to the preceding claim 1, which further comprises a multilayer film liner (3) attached to the inner surface of the fiber pulp body (2).

3. A packaging item (1) according to any one of the preceding claims 1 or 2, wherein said liner (3) comprises from outside to inside:
(i) an outermost polymeric layer comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof, said outermost layer having a thickness comprised between 10 and 100 µm, and said first layer having an elongation at break comprised between 10% and 800%, a melt flow rate (MFR) comprised between 2 and 4 when measured at 150°C during 10 minutes with a pressure of 2.16 kg, and said first layer having a melting point temperature comprised below 80°C,
(ii) a first tie layer comprising a biodegradable modified or functionalized polyolefin, having a melting point temperature comprised between 180°C and 230°C and a thickness comprised between 1 and 12 µm,
(iii) a barrier layer comprising a polymer selected within the list of: butenediol vinyl alcohol copolymer (BVOH), polyvinyl alcohol (PVOH) or a combination thereof, and having a melting point temperature comprised between 180°C and 230°C and a thickness comprised between 1 and 15 µm,
(iv) a second tie layer comprising a biodegradable modified or functionalized polyolefin, having a melting point temperature comprised between 180°C and 230°C and a thickness comprised between 1 and 10 µm,
(v) an innermost polymeric layer comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof, said first layer having a thickness comprised between 10 and 100 µm, and said innermost layer having an elongation at break comprised between 10% and 1000%, a melt flow rate (MFR) comprised between 4 and 10 when measured at 190°C during 10 minutes with a pressure of 2.16 kg, and said first layer having a melting point temperature comprised between 110°C and 180°C.

4. A packaging item (1) according to any one of the preceding claims 1 or 2, wherein said liner (3) comprises from outside to inside:
(i) an outermost organic adhesive layer for attaching the liner to the moulded fiber pulp, said adhesive layer comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof, said outermost layer having a thickness comprised between 10 and 100 µm, and said first layer having an elongation at break comprised between 10% and 800%, a melt flow rate (MFR) comprised between 2 and 4 when measured at 150°C during 10 minutes with a pressure of 2.16 kg, and said first layer having a melting point temperature comprised below 80°C,
(ii) an organic middle barrier layer comprising a butenediol vinyl alcohol copolymer (BVOH) grafted with maleic anhydride, and having a melting point temperature comprised between 180°C and 230°C and a thickness comprised between 1 and 20 µm,
(iii) an innermost organic structural layer comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof, said first layer having a thickness comprised between 10 and 100 µm, and said innermost layer having an elongation at break comprised between 10% and 1000%, a melt flow rate (MFR) comprised between 4 and 10 when measured at 190°C during 10 minutes with a pressure of 2.16 kg, and said first layer having a melting point temperature comprised between 110°C and 180°C.

5. A packaging item (1) according to any one of the preceding claims 1 to 4, which is a primary packaging selected within the list of: tray, sachet, gusset wrap, tube, bag, box, brick, container, closure or a combination thereof, said item is a secondary packaging for enclosing a primary packaging.

6. A packaging item (1) according to any one of the preceding claims 1 to 4, which is a capsule (1) for beverage preparation, comprising a cup-shaped body (2) with a peripheral rim (4), and at least one closing membrane (5) attached to the rim (4) of said body (2), said body (2) and said at least one membrane (5) defining a closed ingredient compartment (6), said capsule (1) being adapted to be pierced by water injection means of a beverage preparation machine for injecting water under pressure in the compartment, for preparing a beverage therein.

7. A packaging item (1) according to any one of the preceding claim 6, wherein the closing membrane (5) is made of an extrusion coated paper, a fiber-spinning coated paper, or a polymer film comprising a compatible polymer material.

8. A packaging item (1) according to any one of the preceding claims, which is manufactured by injection-moulding, compression moulding, extrusion-moulding, or thermoforming.

9. A packaging item (1) according to any one of the preceding claims, wherein the mesh is made of plant or animal fibres including seed hairs, such as cotton, or stem (or bast) fibres such as flax and hemp, leaf fibres such as sisal, husk fibres such as coconut, or hardwood fibres sourced from the following trees: ash (*Genus Fraxinus*), beech (*Genus Fagus*), basswood (*Genus Tilia*)*,* birch (*Genus Betula*), black cherry (*Genus Prunus*), black walnut / butternut (*Genus Juglans*), cottonwood (*Genus Populus*), elm (*Genus Ulmus*), hackberry (*Genus Celtis*), hickory (*Genus Carya*), holly (*Genus Ilex*), locust (*Genus Robinia; Genus Gleditsia*), magnolia (*Genus Magnolia*), maple (Genus Acer), oak (*Genus Quercus*), poplar (*Genus Populus*), red alder (*Genus Alnus*), royal paulownia (*Genus Paulownia*), sassafras (*Genus Sassafras*), sweetgum (*Genus Liquidambar*), sycamore (*Genus Platanus*), tupelo (*Genus Nyssa*), willow (*Genus Salix*), yellow-poplar (*Genus Liriodendron*), eucalyptus, mushroom-based, silk, wool, or a combination thereof.

10. A packaging item (1) according to any one of the preceding claims, wherein the product packed into said packaging item is an edible product for human or animal consumption, in particular roast and ground coffee, a water-soluble ingredient for preparing a beverage, a soup powder, an infant nutrition product, cocoa-based or dairy-based compositions, a fruit-juice precursor, or a combination thereof.

11. A packaging item (1) according to any one of the preceding claims, wherein the tensile strength of the fiber pulp fibres is comprised within the range of 1200 to 2000 MPa, preferably 1500 to 1800 MPa.

12. A packaging item (1) according to any one of the preceding claims 1 to 11, wherein said water-soluble biopolymer is a water-soluble compostable polymer selected within the list of: starch or hydroxyl propyl cellulose (HPLC) or a combination thereof.

13. A packaging item (1) according to any one of the preceding claims 1 to 11, wherein said polypeptide is at least one of a fibrous polypeptide or a globular polypeptide selected within the list of: collagen, ovalbumin, serum albumin, lactoglobulin, or hydrolysed forms thereof.

14. A method for manufacturing a packaging item according to any one of the preceding claims 1 to 13, said method comprising the steps of, in order:
(i) pre-cutting a flat woven fiber matrix to a predetermined shape,
(ii) drenching said flat mesh into a water-soluble biopolymer, a water-soluble compostable polymer, a starch-based solution, or a combination thereof, or into a polypeptide solution,
(iii) forming said flat mesh into a tridimensional mesh preform and drying said water-soluble biopolymer, water-soluble compostable polymer, and/or starch-based solution, or curing said polypeptide solution into a Maillard reaction, in order to obtain a hard mesh,
(iv) placing said mesh preform onto the male forming part of a pulp forming mould to cover at least partially said male forming part with said mesh, said male forming part being equipped with sucking channels,
(v) placing said male forming part into a slurry tank filled with fiber pulp fibre slurry, and sucking pulp fibres from the slurry onto the surface of said male forming part, such that said mesh is at least partially embedded into a wet mass of cellulosic fibre pulp,
(vi) closing the mould by moving said male forming part into a female forming cavity, compressing the wet pulp into a tridimensional item, and heating the mould to dry said wet pulp item,
(vii) opening the mould, and ejecting said cellulosic fibre packaging item therefrom.

## Patentansprüche

1. Verpackungsartikel (1), umfassend einen dreidimensionalen Körper (2), der aus starrem oder halbstarrem geformtem Faserbrei hergestellt ist, wobei der Körper ein Fach zum Umschließen eines Produkts ausbildet und angepasst ist, um durch Verschlussmittel (5) geschlossen zu werden,
**dadurch gekennzeichnet, dass** der Körper (2) ferner ein verstärkendes starres Netz (7) umfasst, das mindestens teilweise in die Masse von Faserbrei eingebettet ist, das Netz (7) umfassend Fasern, die aus der Liste ausgewählt sind von: natürlichen Pflanzenfasern, tierischen Fasern, synthetischen Biopolymerfasern oder einer Kombination davon, wobei die Fasern mit einem getrockneten wasserlöslichen Biopolymer, einem getrockneten wasserlöslichen kompostierbaren Polymer, einer getrockneten stärkebasierten Lösung oder einer Kombination davon imprägniert sind oder die Fasern mit einem gehärteten Polypeptid imprägniert sind.

2. Verpackungsartikel (1) nach dem vorstehenden Anspruch 1, der ferner eine mehrschichtige Folienauskleidung (3) umfasst, die an der inneren Oberfläche des Faserbreikörpers (2) angebracht ist.

3. Verpackungsartikel (1) nach einem der vorstehenden Ansprüche 1 oder 2, wobei die Auskleidung (3) von außen nach innen umfasst:
(i) eine äußerste polymere Schicht, umfassend ein biologisch abbaubares Polymer, das aus der Liste ausgewählt ist von: Polybutylensuccinat (PBSA / bioPBS), Polybutylenadipatterephthalat (PBAT), Stärke, Cellulosederivaten, Polymilchsäure (PLA), Polyhydroxyalkanoaten (PHA) oder einer Kombination davon, wobei die äußerste Schicht eine Dicke aufweist, die zwischen 10 und 100 µm umfasst ist und die erste Schicht eine Bruchdehnung, die zwischen 10 % und 800 % umfasst ist, einen Schmelzstrom (MFR), der zwischen 2 und 4 umfasst ist, wenn bei 150 °C während 10 Minuten mit einem Druck von 2,16 kg gemessen, aufweist und die erste Schicht eine Schmelzpunkttemperatur aufweist, die unter 80 °C umfasst ist,
(ii) eine erste Haftvermittlerschicht, umfassend ein biologisch abbaubares modifiziertes oder funktionalisiertes Polyolefin, die eine Schmelzpunkttemperatur, die zwischen 180 °C und 230 °C umfasst ist, und eine Dicke, die zwischen 1 und 12 µm umfasst ist, aufweist,
(iii) eine Barriereschicht, umfassend ein Polymer, das aus der Liste ausgewählt ist von: Butendiolvinylalkohol-Copolymer (BVOH), Polyvinylalkohol (PVOH) oder einer Kombination davon und die eine Schmelzpunkttemperatur, die zwischen 180 °C und 230 °C umfasst ist, und eine Dicke, die zwischen 1 und 15 µm umfasst ist, aufweist,
(iv) eine zweite Haftvermittlerschicht, umfassend ein biologisch abbaubares modifiziertes oder funktionalisiertes Polyolefin, die eine Schmelzpunkttemperatur, die zwischen 180 °C und 230 °C umfasst ist, und eine Dicke, die zwischen 1 und 10 µm umfasst ist, aufweist,
(v) eine innerste polymere Schicht, umfassend ein biologisch abbaubares Polymer, das aus der Liste ausgewählt ist von: Polybutylensuccinat (PBSA), Polybutylenadipatterephthalat (PBAT), Stärke, Cellulosederivaten, Polymilchsäure (PLA), Polyhydroxyalkanoaten (PHA) oder einer Kombination davon, wobei die erste Schicht eine Dicke aufweist, die zwischen 10 und 100 µm umfasst ist und die innerste Schicht eine Bruchdehnung, die zwischen 10 % und 1000 % umfasst ist, einen Schmelzstrom (MFR), der zwischen 4 und 10 umfasst ist, wenn bei 190 °C während 10 Minuten mit einem Druck von 2,16 kg gemessen, aufweist und die erste Schicht eine Schmelzpunkttemperatur aufweist, die zwischen 110 °C und 180 °C umfasst ist.

4. Verpackungsartikel (1) nach einem der vorstehenden Ansprüche 1 oder 2, wobei die Auskleidung (3) von außen nach innen umfasst:
(i) eine äußerste organische Klebeschicht zum Anbringen der Auskleidung an dem geformten Faserbrei, die Klebeschicht umfassend ein biologisch abbaubares Polymer, das aus der Liste ausgewählt ist von: Polybutylensuccinat (PBSA / bioPBS), Polybutylenadipatterephthalat (PBAT), Stärke, Cellulosederivaten, Polymilchsäure (PLA), Polyhydroxyalkanoaten (PHA) oder einer Kombination davon, wobei die äußerste Schicht eine Dicke aufweist, die zwischen 10 und 100 µm umfasst ist und die erste Schicht eine Bruchdehnung, die zwischen 10 % und 800 % umfasst ist, einen Schmelzstrom (MFR), der zwischen 2 und 4 umfasst ist, wenn bei 150 °C während 10 Minuten mit einem Druck von 2,16 kg gemessen, aufweist und die erste Schicht eine Schmelzpunkttemperatur aufweist, die unter 80 °C umfasst ist,
(ii) eine organische mittlere Barriereschicht, umfassend ein Butendiolvinylalkohol-Copolymer (BVOH), das mit Maleinsäureanhydrid gepfropft ist, und die eine Schmelzpunkttemperatur, die zwischen 180 °C und 230 °C umfasst ist und eine Dicke, die zwischen 1 und 20 µm umfasst ist, aufweist,
(iii) eine innerste organische Strukturschicht, umfassend ein biologisch abbaubares Polymer, das aus der Liste ausgewählt ist von: Polybutylensuccinat (PBSA), Polybutylenadipatterephthalat (PBAT), Stärke, Cellulosederivaten, Polymilchsäure (PLA), Polyhydroxyalkanoaten (PHA) oder einer Kombination davon, wobei die erste Schicht eine Dicke aufweist, die zwischen 10 und 100 µm umfasst ist und die innerste Schicht eine Bruchdrehung, die zwischen 10 % und 1000 % umfasst ist, einen Schmelzstrom (MFR), der zwischen 4 und 10 umfasst ist, wenn bei 190 °C während 10 Minuten mit einem Druck von 2,16 kg gemessen, aufweist und die erste Schicht eine Schmelzpunkttemperatur aufweist, die zwischen 110 °C und 180 °C umfasst ist.

5. Verpackungsartikel (1) nach einem der vorstehenden Ansprüche 1 bis 4, der eine Primärverpackung ist, die aus der Liste ausgewählt ist von: Schale, Päckchen, Seitenfaltenverpackung, Tube, Beutel, Schachtel, Brikett, Behälter, Verschluss oder einer Kombination davon, wobei der Artikel eine Sekundärverpackung zum Umschließen einer Primärverpackung ist.

6. Verpackungsartikel (1) nach einem der vorstehenden Ansprüche 1 bis 4, der eine Kapsel (1) für eine Getränkezubereitung ist, umfassend einen becherförmigen Körper (2) mit einem Umfangsrand (4) und mindestens eine Verschlussmembran (5), die an dem Rand (4) des Körpers (2) angebracht ist, wobei der Körper (2) und die mindestens eine Membran (5) ein geschlossenes Inhaltsstofffach (6) definieren, wobei die Kapsel (1) angepasst ist, um durch Wassereinspritzmitteln einer Getränkezubereitungsmaschine zum Einspritzen von Wasser unter Druck in das Fach zum Zubereiten eines Getränks darin durchstochen zu werden.

7. Verpackungsartikel (1) nach einem der vorstehenden Ansprüche 6, wobei die Verschlussmembran (5) aus einem extrusionsbeschichteten Papier, einem faserspinnbeschichteten Papier oder einem Polymerfilm, umfassend ein kompatibles Polymermaterial, hergestellt ist.

8. Verpackungsartikel (1) nach einem der vorstehenden Ansprüche, der durch ein Spritzgießen, ein Formpressen, ein Extrusionsblasformen oder ein Thermoformen erzeugt wird.

9. Verpackungsartikel (1) nach einem der vorstehenden Ansprüche, wobei das Netz aus Pflanzen- oder tierischen Fasern hergestellt ist, die Samenhaare, wie Baumwolle, oder Stängel- (oder Bast-) Fasern wie Flachs und Hanf, Blattfasern wie Sisal, Hülsenfasern wie Kokosnuss, oder Hartholzfasern einschließt, die von den folgenden Bäumen bezogen werden: Esche (*Gattung Fraxinus*), Buche (*Gattung Fagus*), Linde (*Gattung Tilia*), Birke (*Gattung Betula*), Späte Traubenkirsche (*Gattung Prunus*), Schwarznuss / Butternuss (*Gattung Juglans*), Amerikanische Schwarz-Pappel (*Gattung Populus*), Ulme (*Gattung Ulmus*), Zürgelbaum (*Gattung Celtis*), Hickory (*Gattung Carya*), Stechpalme (*Gattung Ilex*), Robinie (*Gattung Robinia; Gattung Gleditsia*), Magnolie (*Gattung Magnolia*), Ahorn (Gattung Acer), Eiche (*Gattung Quercus*), Pappel (*Gattung Populus*), Roterle (*Gattung Alnus*), Blauglockenbaum (*Gattung Paulownia*), Sassafras (*Gattung Sassafras*), Amberbaum (*Gattung Liguidambar*), Sykamore (*Gattung Platanus*), Tupelobaum (*Gattung Nyssa*), Weide (*Gattung Salix*), Tulpenbaum (*Gattung Liriodendron*), Eukalyptus, auf Pilzbasis, Seide, Wolle oder einer Kombination davon.

10. Verpackungsartikel (1) nach einem der vorstehenden Ansprüche, wobei das Produkt, das in den Verpackungsartikel verpackt wird, ein essbares Produkt für einen menschlichen oder einen tierischen Verzehr ist, insbesondere gerösteter und gemahlener Kaffee, ein wasserlöslicher Inhaltsstoff zum Zubereiten eines Getränks, ein Suppenpulver, ein Säuglingsnahrungsprodukt, kakaobasierte oder milchbasierte Zusammensetzungen, ein Fruchtsaftvorläufer oder eine Kombination davon.

11. Verpackungsartikel (1) nach einem der vorstehenden Ansprüche, wobei die Zugfestigkeit der Faserbreifasern innerhalb des Bereichs von 1200 bis 2000 MPa, vorzugsweise 1500 bis 1800 MPa, umfasst ist.

12. Verpackungsartikel (1) nach einem der vorstehenden Ansprüche 1 bis 11, wobei das wasserlösliche Biopolymer ein wasserlösliches kompostierbares Polymer ist, das aus der Liste ausgewählt ist von: Stärke oder Hydroxypropylcellulose (HPLC) oder einer Kombination davon.

13. Verpackungsartikel (1) nach einem der vorstehenden Ansprüche 1 bis 11, wobei das Polypeptid mindestens eines von einem faserförmigen Polypeptid oder einem globulären Polypeptid ist, das aus der Liste ausgewählt ist von: Kollagen, Ovalbumin, Serumalbumin, Lactoglobulin oder hydrolysierten Formen davon.

14. Verfahren zum Erzeugen eines Verpackungsartikels nach einem der vorstehenden Ansprüche 1 bis 13, das Verfahren umfassend die Schritte, in einer Reihenfolge:
(i) Vorschneiden einer flachen gewebten Fasermatrix in eine vorbestimmte Gestalt,
(ii) Eintauchen des flachen Netzes in ein wasserlösliches Biopolymer, ein wasserlösliches kompostierbares Polymer, eine stärkebasierte Lösung oder eine Kombination davon oder in eine Polypeptidlösung,
(iii) Ausbilden des flachen Netzes in einen dreidimensionalen Netzvorformling und Trocknen des wasserlöslichen Biopolymers, des wasserlöslichen kompostierbaren Polymers und/oder der stärkebasierten Lösung oder Aushärten der Polypeptidlösung zu einer Maillard-Reaktion, um ein hartes Netz zu erhalten,
(iv) Platzieren des Netzvorformlings auf dem männlichen Umformteil eines Breiformwerkzeugs, um das männliche Umformteil mindestens teilweise mit dem Netz zu bedecken, wobei das männliche Umformteil mit Saugkanälen ausgestattet ist,
(v) Platzieren des männlichen Umformteils in ein Absatzbecken, das mit Faserbrei-Fasersuspension gefüllt ist, und Ansaugen von Breifasern aus der Suspension auf die Oberfläche des männlichen Umformteils, derart, dass das Netz mindestens teilweise in eine nasse Masse aus cellulosehaltigem Faserbrei eingebettet wird,
(vi) Schließen der Gussform durch ein Bewegen des männlichen Umformteils in einen weiblichen Formhohlraum, Pressen des nassen Breis in einen dreidimensionalen Artikel und Erhitzen der Gussform, um den Artikel aus nassem Brei zu trocknen,
(vii) Öffnen der Gussform und Auswerfen des cellulosehaltigen Faserverpackungsartikels daraus.

## Revendications

1. Article de conditionnement (1) comprenant un corps tridimensionnel (2) constitué de pâte fibreuse moulée rigide ou semi-rigide, ledit corps formant un compartiment destiné à enfermer un produit et adapté pour être fermé par un moyen de fermeture (5), **caractérisé en ce que** ledit corps (2) comprend en outre un maillage rigide de renforcement (7) noyé au moins partiellement dans la masse de pâte fibreuse, ledit maillage (7) comprenant des fibres choisies dans la liste de : fibres végétales naturelles, fibres animales, fibres synthétiques biopolymères, ou une combinaison de celles-ci, lesdites fibres étant imprégnées d'un biopolymère hydrosoluble séché, d'un polymère compostable hydrosoluble séché, d'une solution à base d'amidon séchée, ou d'une combinaison de ceux-ci, ou lesdites fibres étant imprégnées d'un polypeptide durci.

2. Article de conditionnement (1) selon la revendication 1 précédente, qui comprend en outre une doublure de film multicouche (3) fixée à la surface interne du corps de pâte fibreuse (2).

3. Article de conditionnement (1) selon l'une quelconque des revendications 1 ou 2 précédentes, dans lequel ladite doublure (3) comprend, de l'extérieur vers l'intérieur :
(i) une couche polymère la plus externe comprenant un polymère biodégradable choisi dans la liste de : polybutylène succinate (PBSA/bioPBS), polybutylène adipate téréphtalate (PBAT), amidon, dérivés de cellulose, acide polylactique (PLA), polyhydroxyalcanoates (PHA), ou une combinaison de ceux-ci, ladite couche la plus externe ayant une épaisseur comprise entre 10 et 100 µm, et ladite première couche ayant un allongement à la rupture compris entre 10 % et 800 %, un indice de fluidité à l'état fondu (MFR) compris entre 2 et 4 lorsqu'il est mesuré à 150 °C pendant 10 minutes avec une pression de 2,16 kg, et ladite première couche ayant une température de point de fusion comprise en dessous de 80 °C,
(ii) une première couche de liaison comprenant une polyoléfine modifiée ou fonctionnalisée biodégradable, ayant une température de point de fusion comprise entre 180 °C et 230 °C et une épaisseur comprise entre 1 et 12 µm,
(iii) une couche barrière comprenant un polymère choisi dans la liste de : copolymère de butènediol alcool vinylique (BVOH), alcool polyvinylique (PVOH) ou une combinaison de ceux-ci, et ayant une température de point de fusion comprise entre 180 °C et 230 °C et une épaisseur comprise entre 1 et 15 µm,
(iv) une seconde couche de liaison comprenant une polyoléfine modifiée ou fonctionnalisée biodégradable, ayant une température de point de fusion comprise entre 180 °C et 230 °C et une épaisseur comprise entre 1 et 10 µm,
(v) une couche polymère la plus interne comprenant un polymère biodégradable choisi dans la liste de : polybutylène succinate (PBSA), polybutylène adipate téréphtalate (PBAT), amidon, dérivés de cellulose, acide polylactique (PLA), polyhydroxyalcanoates (PHA) ou une combinaison de ceux-ci, ladite première couche ayant une épaisseur comprise entre 10 et 100 µm, et ladite couche la plus interne ayant un allongement à la rupture compris entre 10 % et 1000 %, un indice de fluidité à l'état fondu (MFR) compris entre 4 et 10 lorsqu'il est mesuré à 190 °C pendant 10 minutes avec une pression de 2,16 kg, et ladite première couche ayant une température de point de fusion comprise entre 110 °C et 180 °C.

4. Article de conditionnement (1) selon l'une quelconque des revendications 1 ou 2 précédentes, dans lequel ladite doublure (3) comprend, de l'extérieur vers l'intérieur :
(i) une couche adhésive organique la plus externe permettant de fixer la doublure à la pâte fibreuse moulée, ladite couche adhésive comprenant un polymère biodégradable choisi dans la liste de : polybutylène succinate (PBSA/bioPBS), polybutylène adipate téréphtalate (PBAT), amidon, dérivés de cellulose, acide polylactique (PLA), polyhydroxyalcanoates (PHA), ou une combinaison de ceux-ci, ladite couche la plus externe ayant une épaisseur comprise entre 10 et 100 µm, et ladite première couche ayant un allongement à la rupture compris entre 10 % et 800 %, un indice de fluidité à l'état fondu (MFR) compris entre 2 et 4 lorsqu'il est mesuré à 150 °C pendant 10 minutes avec une pression de 2,16 kg, et ladite première couche ayant une température de point de fusion comprise en dessous de 80 °C,
(ii) une couche barrière intermédiaire organique comprenant un copolymère butènediol alcool vinylique (BVOH) greffé avec de l'anhydride maléique, et ayant une température de point de fusion comprise entre 180 °C et 230 °C et une épaisseur comprise entre 1 et 20 µm,
(iii) une couche structurelle organique la plus interne comprenant un polymère biodégradable choisi dans la liste de : polybutylène succinate (PBSA), polybutylène adipate téréphtalate (PBAT), amidon, dérivés de cellulose, acide polylactique (PLA), polyhydroxyalcanoates (PHA) ou une combinaison de ceux-ci, ladite première couche ayant une épaisseur comprise entre 10 et 100 µm, et ladite couche la plus interne ayant un allongement à la rupture compris entre 10 % et 1000 %, un indice de fluidité à l'état fondu (MFR) compris entre 4 et 10 lorsqu'il est mesuré à 190 °C pendant 10 minutes avec une pression de 2,16 kg, et ladite première couche ayant une température de point de fusion comprise entre 110 °C et 180 °C.

5. Article de conditionnement (1) selon l'une quelconque des revendications 1 à 4 précédentes, qui est un conditionnement primaire choisi dans la liste de : plateau, sachet, emballage à soufflet, tube, sac, boîte, brique, contenant, fermeture ou une combinaison de ceux-ci, ledit article est un conditionnement secondaire permettant d'enfermer un conditionnement primaire.

6. Article de conditionnement (1) selon l'une quelconque des revendications 1 à 4 précédentes, qui est une capsule (1) pour préparation de boisson, comprenant un corps en forme de coupelle (2) avec un rebord périphérique (4), et au moins une membrane de fermeture (5) fixée au rebord (4) dudit corps (2), ledit corps (2) et ladite au moins une membrane (5) définissant un compartiment d'ingrédient fermé (6), ladite capsule (1) étant conçue pour être percée par un moyen d'injection d'eau d'une machine de préparation de boisson permettant d'injecter de l'eau sous pression dans le compartiment, pour y préparer une boisson.

7. Article de conditionnement (1) selon l'une quelconque de la revendication 6 précédente, dans lequel la membrane de fermeture (5) est constituée d'un papier enduit par extrusion, d'un papier enduit par filage de fibres, ou d'un film polymère comprenant un matériau polymère compatible.

8. Article de conditionnement (1) selon l'une quelconque des revendications précédentes, qui est fabriqué par moulage par injection, moulage par compression, moulage par extrusion, ou thermoformage.

9. Article de conditionnement (1) selon l'une quelconque des revendications précédentes, dans lequel le maillage est constitué de fibres végétales ou animales, y compris de poils de graines, comme le coton, ou de fibres de tige (ou de liber) comme le lin et le chanvre, de fibres de feuilles comme le sisal, de fibres d'enveloppe comme la noix de coco, ou de fibres de feuillus provenant des arbres suivants : frêne (*genre Fraxinus*), hêtre (*genre Fagus*), tilleul (*genre Tilia*), bouleau (*genre Betula*), cerisier noir (*genre Prunus*), noyer noir/noyer cendré (*genre Juglans*), peuplier (*genre Populus*), orme (*genre Ulmus*), micocoulier (*genre Celtis*)*,* caryer (*genre Carya*), houx (*genre Ilex*), robinier (*genre Robinia ; genre Gleditsia*), magnolia (*genre Magnolia*), érable (genre Acer), chêne (*genre Quercus*), peuplier (*genre Populus),* aulne rouge (*genre Alnus*), paulownia royal (*genre Paulownia*), sassafras (*genre Sassafras*), liquidambar (*genre Liguidambar*), sycomore (*genre Platanus*), tupelo (*genre Nyssa*), saule (*genre Salix*), tulipier d'Amérique (*genre Liriodendron*), eucalyptus, à base de champignons, soie, laine, ou une combinaison de ceux-ci.

10. Article de conditionnement (1) selon l'une quelconque des revendications précédentes, dans lequel le produit conditionné dans ledit article de conditionnement est un produit comestible pour consommation humaine ou animale, en particulier du café torréfié et moulu, un ingrédient hydrosoluble permettant de préparer une boisson, une soupe en poudre, un produit de nutrition infantile, des compositions à base de cacao ou à base de produits laitiers, un précurseur de jus de fruit, ou une combinaison de ceux-ci.

11. Article de conditionnement (1) selon l'une quelconque des revendications précédentes, dans lequel la résistance à la traction des fibres de la pâte fibreuse est comprise dans la plage de 1200 à 2000 MPa, de préférence de 1500 à 1800 MPa.

12. Article de conditionnement (1) selon l'une quelconque des revendications 1 à 11 précédentes, dans lequel ledit biopolymère hydrosoluble est un polymère compostable hydrosoluble choisi dans la liste de : amidon ou hydroxylpropylcellulose (HPLC) ou une combinaison de ceux-ci.

13. Article de conditionnement (1) selon l'une quelconque des revendications 1 à 11 précédentes, dans lequel ledit polypeptide est au moins l'un parmi un polypeptide fibreux ou un polypeptide globulaire choisi dans la liste de : collagène, ovalbumine, albumine sérique, lactoglobuline, ou des formes hydrolysées de ceux-ci.

14. Procédé de fabrication d'un article de conditionnement selon l'une quelconque des revendications 1 à 13 précédentes, ledit procédé comprenant les étapes consistant à, dans l'ordre :
(i) prédécouper une matrice de fibres tissées à plat selon une forme prédéterminée,
(ii) tremper ledit maillage plat dans un hydrosoluble biopolymère, un polymère compostable hydrosoluble, une solution à base d'amidon, ou une combinaison de ceux-ci, ou dans une solution polypeptidique,
(iii) former ledit maillage plat en une préforme de maillage tridimensionnelle et sécher ledit biopolymère hydrosoluble, ledit polymère compostable hydrosoluble, et/ou ladite solution à base d'amidon, ou faire durcir ladite solution polypeptidique dans une réaction de Maillard, afin d'obtenir un maillage dur,
(iv) placer ladite préforme de maillage sur la partie de formation mâle d'un moule de formation de pâte pour recouvrir au moins partiellement ladite partie de formation mâle avec ledit maillage, ladite partie de formation mâle étant équipée de canaux d'aspiration,
(v) placer ladite partie de formation mâle dans une cuve de suspension remplie de suspension de fibres de pâte fibreuse, et aspirer des fibres de pâte de la suspension sur la surface de ladite partie de formation mâle, de telle sorte que ledit maillage est au moins partiellement noyé dans une masse humide de pâte fibreuse cellulosique,
(vi) fermer le moule en déplaçant ladite partie de formation mâle dans une cavité de formation femelle, comprimer la pâte humide en un article tridimensionnel, et chauffer le moule pour sécher ledit article en pâte humide,
(vii) ouvrir le moule, et éjecter ledit article de conditionnement en fibres cellulosiques de celui-ci.
